# EUROPÄISCHE PATENTSCHRIFT

(11) **EP 0 842 010 B1**
(45) Veröffentlichungstag und Bekanntmachung des Hinweises auf die Patenterteilung: **06.10.1999**
(21) Anmeldenummer: 96928387.8
(22) Anmeldetag: 27.07.1996
(51) Int. Cl.: B23Q 39/02, B27B 5/065, B23D 47/04, B23D 59/00, B27C 9/04

(54) **VORRICHTUNG ZUR HORIZONTALBEARBEITUNG VON PLATTEN**
DEVICE FOR MACHINING HORIZONTAL PANELS
EQUIPEMENT SERVANT A USINER HORIZONTALEMENT LES PANNEAUX

(30) Priorität: 28.07.1995 DE 19527727
(43) Veröffentlichungstag der Anmeldung: 20.05.1998
(73) Patentinhaber: Schenk Werkzeug- und Maschinenbau Gmbh, 73550 Waldstetten (DE); Kunz GmbH & Co., D-74417 Gschwend (DE)
(72) Erfinder: WINDEISEN, Joachim, D-73525 Schwäbisch Gmünd (DE); SCHNABEL, Wolfgang, D-73563 Mögglingen (DE)
(74) Vertreter: Patentanwälte Ruff, Beier, Schöndorf und Mütschele
(86) Internationale Anmeldenummer: EP9603321
(87) Internationale Veröffentlichungsnummer: WO9704918

(56) Entgegenhaltungen:
- EP-A- 0 465 435
- EP-A- 0 609 573
- WO-A-92/12816
- DE-A- 1 528 002
- US-A- 4 130 788
- US-A- 4 945 958

## Beschreibung

Die Erfindung betrifft eine Vorrichtung zur Bearbeitung von Platten, insbesondere Holzwerkstoffplatten, in im wesentlichen horizontaler Lage gemäß dem Oberbegriff des Patentanspruchs 1 und wie aus WO-A-92 12816 bekannt ist.

Insbesondere im Baubereich besteht die Notwendigkeit, Platten, darunter insbesondere Holzwerkstoffplatten, möglichst effektiv, d.h. mit ausreichender Genauigkeit und in kurzer Zeit zu bearbeiten. Besteht das Bearbeiten in einem Zuschneiden der Platte, d.h. in ihrem Bereitstellen mit den gewünschten Abmessungen und Aussparungen, so können die bisher existierenden Sägevorrichtungen bei einer Bearbeitung in horizontaler Lage, d.h. bei liegender Platte, die gestellten Anforderungen an die Effektivität der Bearbeitung oft nicht erfüllen. Dieser Nachteil kommt insbesondere dann zum Tragen, wenn die Sägevorrichtung Bestandteil einer Gesamtanlage ist, bei der immer genügend zugeschnittene Platten zur Weiterverarbeitung vorhanden sein müssen.

Die Erfindung stellt sich deshalb die Aufgabe, eine Vorrichtung der genannten Art zur Verfügung zu stellen, die eine effektive Plattenbearbeitung ermöglicht und die beschriebenen Nachteile vermeidet. Dabei soll es nicht nur möglich sein, die Platten mit ausreichender Genauigkeit in möglichst kurzer Zeit bereitzustellen, sondern die Vorrichtung soll in eine Gesamtanlage integriert werden können, die vollautomatisch Bauteile aus den Einzelplatten herstellt.

Diese Aufgabe wird gelöst durch eine Vorrichtung, wie sie im Patentanspruch 1, beansprucht ist. Bevorzugte Ausführungsformen sind in den abhängigen Ansprüchen beschrieben. Der Wortlaut sämtlicher Ansprüche wird durch Bezugnahme zum Inhalt der Beschreibung gemacht.

Erfindungsgemäß weist die Vorrichtung zur Bearbeitung der Platten in im wesentlichen horizontaler Lage eine Säge- und/oder Fräsvorrichtung zur Erzeugung der Schnittflächen auf. Dabei besitzt die Sägevorrichtung mindestens ein Sägewerkzeug und die Fräsvorrichtung mindestens ein Fräswerkzeug.

Bei bevorzugten Ausführungsformen ist sowohl eine Säge- als auch eine Fräsvorrichtung mit den entsprechenden Werkzeugen vorhanden, wobei die beiden Vorrichtungen insbesondere in einer Zuschneidevorrichtung kombiniert sind. Durch die Kombination von Säge und Fräse können die erforderlichen Schnitte mit der gewünschten Genauigkeit ausgeführt werden, da durch den Einsatz der Fräse die durch eine Säge nicht mögliche Bearbeitung ausführbar und damit die Erzeugung der Schnittflächen optimiert wird.

Die Säge- und/oder Fräsvorrichtung bzw. das Säge- und/oder Fräswerkzeug ist vorzugsweise über mehrere Parameter computergesteuert gewegbar. Dadurch ist eine automatische Ausführung der gewünschten Schnitte möglich.

In Weiterbildung erfolgt die Bewegung der Säge und/oder Fräse bzw. deren Werkzeuge nach Vorgabe, so daß nach einem vorgewählten Ablauf Schnittflächen erzeugt werden können. Insbesondere handelt es sich bei der Vorgabe um eine sog. CAD-Vorgabe, d.h. der Zuschnitt erfolgt nach einem CAD-unterstützt erstellten Bauplan, der die Schnittflächenparameter enthält.

Die Bewegung bzw. Steuerung der Säge- und/oder Fräsvorrichtung erfolgt bzgl. eines Koordinatensystems mit
- x :: erste Richtung parallel zu einer Plattenoberfläche
- y :: zweite Richtung parallel zur Plattenoberfläche und senkrecht zur ersten Richtung
- z :: dritte Richtung senkrecht zur Plattenoberfläche
nach Maßgabe folgender Parameter:
- A :: (x,y)-Koordinaten des Anfangspunktes einer Schnittlinie zwischen Schnittfläche und Plattenoberfläche
- E :: (x,y)-Koordinaten des Endpunktes der Schnittlinie zwischen Schnittfläche und Plattenoberfläche
- N :: (x,y,z)-Koordinaten einer Schnittflächennormalen.

Durch diese Auswahl wird es möglich, eine nach Größe und Orientierung beliebig vorgebbare Schnittfläche zu erzeugen. Schnittfläche soll hier die durch das Bearbeitungswerkzeug, wie Säge oder Fräse, erzeugbare Oberfläche sein. Diese kann sowohl eben als auch gekrümmt sein. Der Abstand zwischen dem Anfangspunkt A und dem Endpunkt E wird als Schnittlänge bezeichnet, die beispielsweise die Kantenlänge von Fensterausschnitten oder dergleichen repräsentiert. Weitere Ausschnitte, die durch die genannten Parameter wiedergegeben werden können, sind dem Fachmann bekannt, beispielsweise aus der Vorfertigung von Schalungselementen.

Ein weiterer Parameter, der für die Bewegung bzw. Steuerung der Säge- und/oder Fräsvorrichtung bzw. deren Werkzeuge gewählt werden kann, ist
- T :: Betrag eines in der Schnittfläche senkrecht zur Schnittlinie A-E verlaufenden Schnittiefenvektors.
Dadurch wird vorgebbar, wie weit ein Bearbeitungswerkzeug um eine beispielsweise der Dicke der Platte anpaßbare Strecke eingetaucht wird. Diese Schnittiefe kann so gewählt sein, daß bei maximal zu erwartender Schrägstellung der Schnittfläche diese die Einzelplatte gerade vollständig von der dem Werkzeug zugewandten Plattenoberfläche bis zur Plattenrückseite durchläuft. Durch die Wahl des Parameters ist die Schnittiefe der Schrägstellung der Schnittfläche anpaßbar.

In Weiterbildung sind die Sägevorrichtung und die Fräsvorrichtung parallel zur x-y-Ebene, d.h. der durch die Plattenoberfläche definierten Ebene, verfahrbar an einem Translationsgestell oder Translationsrahmen angeordnet. Grundsätzlich können getrennte Translationsgestelle für die Sägevorrichtung und die Fräsvorrichtung vorgesehen sein. Vorzugsweise sind die beiden Vorrichtungen an einem gemeinsamen Translationsgestell (Translationsrahmen) angeordnet. Die beschriebene Anordnung ermöglicht eine freie Bewegung der Sägevorrichtung und der Fräsvorrichtung parallel zur x-y-Ebene.

Um weitere Orientierungen zu ermöglichen, ist bei der erfindungsgemäßen Vorrichtung vorzugsweise ein drehbares und ggf. auch kippbares Karussell vorgesehen, das die Säge-/Fräsvorrichtungen bzw. Säge-/Fräswerkzeuge aufnimmt. Dieses Karussell ist insbesondere am Translationsgestell oder Translationsrahmen angeordnet. Die Drehbarkeit des Karussells und damit der daran vorgesehenen Fräs- bzw. Sägewerkzeuge kann über ein Zahn- bzw. Schneckenrad und eine damit zusammenwirkende Zahn- bzw. Schneckenwelle ermöglicht sein. Das Zahn- bzw. Schneckenrad ist dabei vorzugsweise am Außenumfang vorgesehen und wirkt mit einer tangential angeordneten, motorgetriebenen Zahn- bzw. Schneckenwelle zusammen. Dadurch wird der insbesondere beim Sägewerkzeug zum Tragen kommende Vorteil erreicht, daß die Schnittfläche über einen Winkel von maximal 360° verschwenkt werden kann. Damit sind nicht nur gerade Schnitte, sondern Schnitte mit allen möglichen Winkeln, beispielsweise bezogen auf die x-Richtung, möglich.

Zur Erzeugung einer Neigung der Schnittfläche relativ zur Platte ist bei einer bevorzugten Ausführungsform vorgesehen, daß das Sägewerkzeug in eine schräg zur x-y-Ebene ausgerichtete Sägeebene schwenkbar ist. Weiter kann es um eine senkrecht zur x-y-Ebene verlaufende Drehachse drehbar und/oder um eine quer, insbesondere senkrecht zur Drehachse verlaufende Sägenschwenkachse schwenkbar in der Sägevorrichtung geführt sein. Das Fräswerkzeug weist eine senkrecht zur x-y-Ebene und vorzugsweise auch schräg dazu ausrichtbare Fräswerkzeugdrehachse auf. Weiter kann es um eine quer, insbesondere senkrecht zur Fräswerkzeugdrehachse verlaufende Fräsenschwenkachse schwenkbar in der Fräsvorrichtung geführt sein. Das Sägewerkzeug kann mit der Sägeebene und das Fräswerkzeug mit der Fräswerkzeugdrehachse parallel zum Schnitttiefenvektor in eine parallel zum Schnittiefenvektor verlaufende Eintauchrichtung linear bewegbar geführt sein, um ein Eintauchen des Werkzeuges in die Platte zu ermöglichen.

Sowohl das Sägewerkzeug als auch das Fräswerkzeug kann die jeweiligen, im vorherigen Absatz beschriebenen Funktionen bzw. Orientierungen einzeln oder in Kombination aufweisen. Bevorzugt sind bei der Erfindung Säge- und/oder Fräsvorrichtungen, bei denen sowohl das Sägewerkzeug als auch das Fräswerkzeug alle Funktionen erfüllen, d.h. sämtliche Bewegungen beim Zuschnitt der Platten ausführen kann.

Bei einer bevorzugten Ausführungsform sind das Fräswerkzeug und das Sägewerkzeug derart zueinander angeordnet, daß die Fräswerkzeugdrehachse im wesentlichen, insbesondere parallel um den Radius des Fräswerkzeuges versetzt, in der Sägeebene liegt. Dadurch kann durch eine parallel zur Sägeebene verlaufende Bewegung das Fräswerkzeug zu der von dem Sägewerkzeug ggf. schon bearbeiteten Stelle bewegt werden bzw. umgekehrt. Das Fräswerkzeug und das Sägewerkzeug können auch um eine gemeinsame, senkrecht zur Sägeebene und senkrecht zur Fräswerkzeugdrehachse verlaufende Schwenkachse vorzugsweise gemeinsam verschwenkbar angeordnet sein, wobei der der Schwenkachse abgewandte Endbereich des Fräswerkzeuges und die der Schwenkachse abgewandte Außenseite des Sägewerkzeuges im wesentlichen den gleichen radialen Abstand von der Schwenkachse aufweisen, und vorzugsweise die Fräswerkzeugdrehachse radial zur Schwenkachse verläuft. Durch diese Anordnung wird es möglich, durch eine Drehung um die Schwenkachse einen Werkzeugwechsel derart vorzunehmen, daß das Fräswerkzeug genau an den Bearbeitungsort des Sägewerkzeuges geschwenkt wird bzw. umgekehrt. Die Werkzeuge können auch derart zueinander angeordnet sein, daß die Sägenschwenkachse und die Fräsenschwenkachse kolinear verlaufen.

Bei bevorzugten Ausführungsformen weist die Vorrichtung ein Tragegestell bzw. eine Trägerkonstruktion mit einem Auflagerahmen für eine Platte, der eine Auflagefläche definiert, auf. Das Translationsgestell bzw. der Translationsrahmen mit Säge- und/oder Fräsvorrichtung ist dabei insbesondere verfahrbar an diesem Tragegestell gelagert. Damit kann die auf der Auflagefläche aufgelegte Platte durch Verfahren des Translationsgestells über ihre gesamte Fläche mit der Säge- und/oder Fräsvorrichtung bearbeitet werden.

Als Auflagefläche können grundsätzlich die Rahmenelemente des Auflagerahmens dienen. In Weiterbildung sind punkt- oder linienförmige Auflageelemente vorgesehen, so daß die zu bearbeitende Platte bei diesen Ausführungsformen nicht vollflächig aufliegt. Gegebenenfalls kann die Bearbeitung der Platte vorzugsweise an Stellen erfolgen, an denen keine Unterstützung von unten vorhanden ist. Dementsprechend kann die Unterkonstruktion durch das Bearbeitungswerkzeug nicht beschädigt werden.

Bei einer anderen bevorzugten Ausführungsform ist auf der Auflagefläche eine weitere, vorzugsweise auswechselbare, Auflage, insbesondere eine Holzwerkstoffplatte, vorgesehen. Diese ist so großflächig, daß sie die maximale Größe der zu bearbeitenden Platten mindestens erreicht, vorzugsweise überschreitet. Auf diese Auflage wird die zu bearbeitende Platte mit ihrer Plattenrückseite flächig aufgelegt. Die großflächige Auflage hat u.a. den Vorteil, daß die zu bearbeitende Platte vollflächig unterstützt ist, daß die Schnitte und Fräsungen in der Tiefe bis in die Auflage hineingeführt werden können und das bei einer Schnittführung, die zwar die Einzelplatte voll durchdringt, nicht aber die großflächige Auflage, die Schnittfläche im wesentlichen nur zur Seite des Bearbeitungswerkzeuges hin geöffnet ist. Dadurch wird eine Absaugung der Bearbeitungsrückstände wie Staub und Späne wesentlich erleichtert.

In Weiterbildung kann die weitere Auflage, die auch als "Grundplatte" bezeichnet werden kann, an bestimmten Stellen Aussparungen aufweisen, die beispielsweise für den Einsatz von Anhebe- oder Aushebemitteln für die zu bearbeitende Platte vorgesehen sind, wie dies im folgenden noch beschrieben wird.

Eine weitere Vorrichtung zur Bearbeitung von Platten in im wesentlichen horizontaler Lage ist nach der Erfindung dadurch gekennzeichnet, daß eine Fixiereinrichtung für die zu bearbeitende Platte vorgesehen ist, die vorzugsweise computergesteuert betätigbar ist. Durch diese Fixiereinrichtung wird die zu bearbeitende Platte in einer definierten Lage reversibel festgelegt, was insbesondere für die ggf. nach Vorgabe erfolgende computergesteuerte Bewegung der Säge- und/oder Fräsvorrichtung vorteilhaft ist.

Die Fixiereinrichtung umfaßt vorzugsweise ein Spannelement nach Art eines Spannbalkens, das sich entlang mindestens eines Teils des Auflagerahmens bzw. einer Plattenseite erstreckt und gegen diese Plattenseite reversibel gedrückt werden kann. Die entsprechende Bewegung beim Festspannen der Platte bzw. die Bewegung in Gegenrichtung beim Öffnen der Fixiereinrichtung erfolgt vorzugsweise mit Hilfe eines Zylinders, der pneumatisch oder hydraulisch bewegt werden kann. Auf der Seite des Auflagerahmens bzw. Plattenseite, die dem Spannbalken gegenüberliegt, ist vorzugsweise mindestens ein Anschlag vorhanden, gegen den der Spannbalken die Platte beim Fixieren drückt. Auf der der Platte zugewandten Seite kann am Spannbalken, vorzugsweise auf Höhe der zu bearbeitenden Platte, ein Vorsprung oder eine Auskragung zum Verschieben der zu bearbeitenden Platte vorgesehen sein. Dieser Vorsprung bzw. Auskragung kann ggf. scharfkantig sein, um ein zusätzliches Verklemmen zu bewirken, ohne die Plattenseite bzw. -kante zu beschädigen.

Eine weitere Vorrichtung zur Bearbeitung von Platten in im wesentlichen horizontaler Lage ist erfindungsgemäß dadurch gekennzeichnet, daß eine Absaugeinrichtung für bei der Bearbeitung entstehende Rückstände wie Staub oder Späne vorgesehen ist.

Bei bevorzugten Ausführungsformen ist das für die Säge- und/oder Fräsvorrichtung vorgesehene Translationsgestell (Translationsrahmen) gleichzeitig ein Teil der Absaugeinrichtung und nutzt vorhandene Bauteile zum Absaugen des Absauggutes. Vorzugsweise ist die Absaugleitung durch mindestens einen Träger des Translationsgestells oder durch den Translationsrahmen gebildet. Diese Absaugleitung ist dann vorzugsweise in das Tragegestell bzw. die Trägerkonstruktion der Vorrichtung geführt. Dadurch müssen keine zusätzlichen Absaugleitungen vom Bearbeitungsort weggeführt werden.

Zur Überführung der Bearbeitungsrückstände bzw. des Absauggutes aus dem Translationsrahmen in das Tragegestell ist ein rohrartiges Zwischenstück vorgesehen. Dieses besitzt insbesondere einen Querschnitt nach Art eines flachen Rechtecks.

Um während der Bewegung des Translationsrahmens eine zuverlässige Absaugung zu gewährleisten, ist das Zwischenstück in einem kanalartig oder rohrartig ausgebildeten Konstruktionselement des Tragegestells bewegbar geführt. Dieses Konstruktionselement erstreckt sich vorzugsweise im rechten Winkel zum Translationsrahmen.

Um ein Austreten des Absauggutes am Übergang vom Translationsgestell bzw. -rahmen in das Tragegestell auszuschließen oder zu minimieren, ist mindestens ein Dichtelement zur Führung des Zwischenstückes, insbesondere am Konstruktionselement des Tragegestells, vorgesehen. Dieses Dichtelement oder diese Dichtelemente sind vorzugsweise lippenartig ausgebildet, so daß beispielsweise das bereits beschriebene rohrartige Zwischenstück bei der Bewegung des Translationsrahmens zwischen zwei Dichtlippen geführt ist.

Eine weitere Vorrichtung zur Bearbeitung von Platten in im wesentlichen horizontaler Lage ist erfindungsgemäß dadurch gekennzeichnet, daß Mittel zum Austransport der Platte und/oder dabei erzeugter Ausschnitte nach der Bearbeitung vorgesehen sind.

Vorzugsweise handelt es sich bei diesen Mitteln um bolzenartige Elemente, die relativ zur Plattenoberfläche vertikal verfahrbar oder ausfahrbar sind. Derartige Mittel befinden sich vorzugsweise am Translationsgestell bzw. -rahmen und bilden dort, insbesondere an der Unterseite, beispielsweise eine Reihe mit regelmäßigem Abstand der einzelnen Elemente untereinander. Dementsprechend ist es möglich, den Translationsrahmen nach einer Seite über die Abmessungen der Platte hinaus zu bewegen, die bolzenartigen Elemente nach unten auszufahren und dann die Platte durch Bewegung des Translationsrahmens in die andere Richtung aus der Vorrichtung auszuschleusen.

Eine weitere Vorrichtung zur Bearbeitung von Platten in im wesentlichen horizontaler Lage ist erfindungsgemäß dadurch gekennzeichnet, daß Mittel zum Anheben oder Ausheben der Platte nach ihrer Bearbeitung vorgesehen sind.

Auch bei diesen Mitteln handelt es sich vorzugsweise um bolzenartige Elemente, die relativ zur Plattenoberfläche vertikal verfahrbar oder ausfahrbar sind. Vorzugsweise sind derartige Mittel am Tragegestell, insbesondere am Auflagerahmen, angeordnet, wobei insbesondere die bolzenartigen Elemente die Auflagefläche von unten her durchragen oder von unten durch diese hindurchführbar sind. Dementsprechend kann die bearbeitete Platte durch Ausfahren der Bolzen von unten angehoben bzw. ausgehoben werden, wobei die Ausschnitte und/oder Abfallstücke auf der Auflagefläche liegen bleiben. Damit ist die bearbeitete Platte von den Abfallstücken getrennt und kann beispielsweise mit Hilfe der beschriebenen Mittel aus der Vorrichtung ausgeschleust werden. Sofern eine weitere Auflage bzw. Grundplatte für die Bearbeitung vorgesehen ist, können an den Stellen der Grundplatte, an denen die Aushebemittel für die Platte vorgesehen sind, Aussparungen vorhanden sein. Gegebenenfalls kann auch eine Vielzahl von Aushebemitteln vorhanden sein, wobei in Abhängigkeit von der Ausgestaltung der fertigen Platte nur diejenigen betätigt werden, die nicht unter Ausschnitten oder Abfallstücken liegen.

Im übrigen kann nicht nur eine Vorrichtung mit der beschriebenen Säge- und/oder Fräsvorrichtung, sondern jede der erfindungsgemäßen Vorrichtungen computergesteuert ggf. auch nach Vorgabe betrieben werden, so daß die Vorrichtung automatisch oder vollautomatisch arbeitet.

Die beschriebenen Merkmale und weitere Merkmale der Erfindung ergeben sich aus der nachfolgenden Beschreibung von bevorzugten Ausführungsformen in Verbindung mit den Unteransprüchen und den Zeichnungen. Hierbei können die einzelnen Merkmale jeweils für sich oder zu mehreren in Kombination miteinander verwirklicht sein.

In den Zeichnungen zeigen:
- Fig. 1: eine schematische Darstellung einer erfindungsgemäßen Vorrichtung in Draufsicht, und
- Fig. 2: eine schematische Darstellung einer erfindungsgemäßen Vorrichtung in Schnittansicht,
- Fig. 3: eine schematische Darstellung eines eine Sägevorrichtung und eine Fräsvorrichtung tragenden Karussells in Draufsicht.

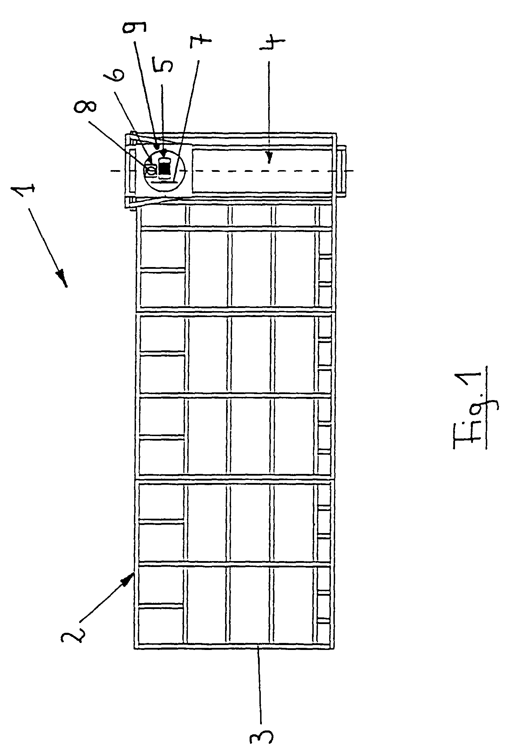

Die in Fig. 1 in Draufsicht dargestellte Vorrichtung 1 zur Bearbeitung von Platten weist ein Tragegestell 2 mit einem Auflagerahmen 3 auf. Dabei kann die Vorrichtung 1 beispielsweise eine Länge von ca. 9 m und eine Breite von ca. 4 m besitzen, wodurch Platten mit entsprechenden Abmessungen bearbeitbar sind.

Weiter ist in Fig. 1 ein Translationsrahmen 4 nach Art eines Portals dargestellt, der entlang der Längsrichtung des Tragegestells 2 bzw. des Auflagerahmens 3 verfahrbar ist. Am Translationsrahmen 4 sind in Kombination eine Sägevorrichtung 5 und eine Fräsvorrichtung 6 angeordnet, die zusammen eine Zuschneidevorrichtung für die Platten bilden. Die Sägevorrichtung 5 besitzt ein Sägewerkzeug 7 und die Fräsvorrichtung 6 besitzt ein Fräswerkzeug 8, die in Fig. 1 schematisch angedeutet sind. Durch die gewählte Anordnung sind die Sägevorrichtung 5 und die Fräsvorrichtung 6 parallel zur x-y-Ebene, die durch den Auflagerahmen 3 bzw. bei Bearbeitung durch die Plattenoberfläche definiert ist, verfahrbar und damit ist jeder Punkt der x-y-Ebene der Platte erreich- und bearbeitbar.

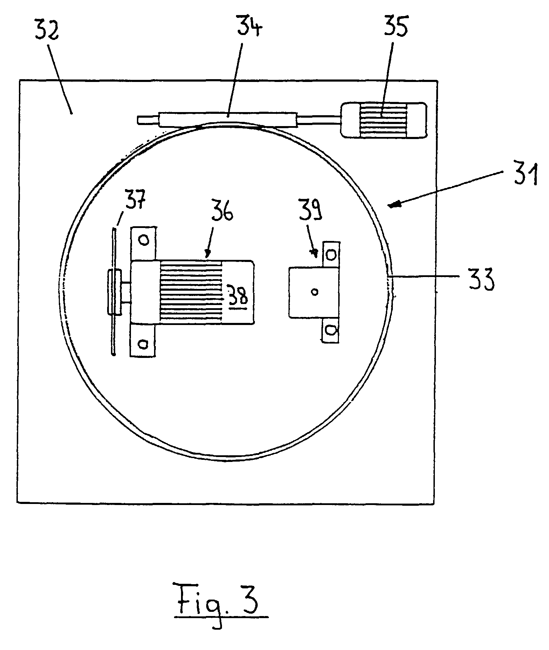

Die Sägevorrichtung 5 und die Fräsvorrichtung 6 sind an einem Karussell 9 angeordnet, dessen Aufbau und Funktionsweise in Fig. 3 erläutert ist.

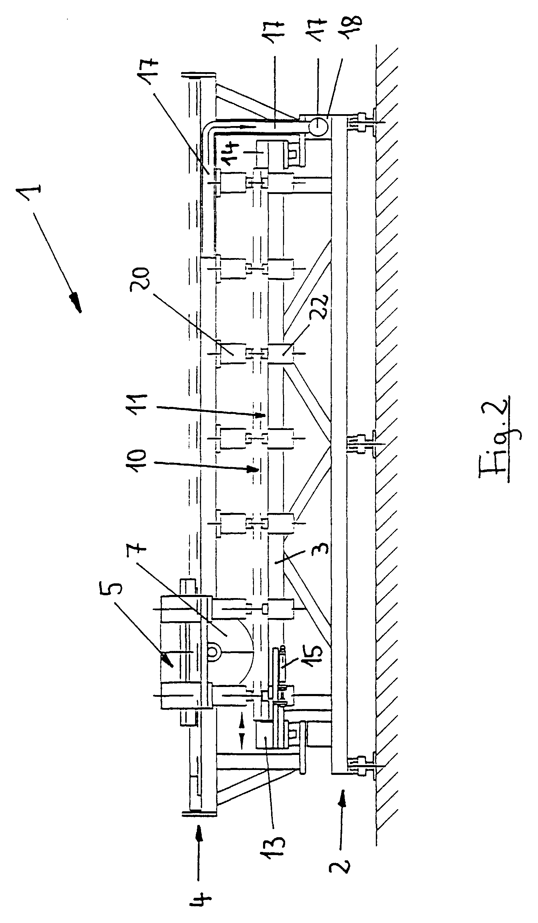

Weitere wichtige Teile der Vorrichtung 1, die aus Fig. 1 nicht direkt hervorgehen, sind in Fig. 2 näher dargestellt.

Wie bereits beschrieben, besitzt die Vorrichtung 1 eine Tragekonstruktion in Form eines Tragegestells 2, das mit Hilfe von nicht näher bezeichneten Fußteilen auf den Boden aufsetzbar ist. Am Tragegestell 2 ist ein Auflagerahmen 3 ausgebildet. Oberhalb des sich beispielsweise in einer Höhe von 60 cm über dem Boden befindenden Auflagerahmens 3 ist der Translationsrahmen 4 vorgesehen, der entlang der Längsseite des Tragegestells 2, d.h. senkrecht zur Zeichenebene, verfahrbar ist. Am Translationsrahmen 4 ist eine Sägevorrichtung 5 mit einem Sägewerkzeug 7 in Kombination mit einer in Fig. 2 nicht dargestellten Fräsvorrichtung 6 mit einem Fräswerkzeug 8 angeordnet. Gemäß Fig. 2 ist die Fräsvorrichtung 6 mit dem Fräswerkzeug 8 durch das Sägewerkzeug 7 und ein im folgenden noch näher beschriebenes Bauteil verdeckt. Sägevorrichtung 5 und Fräsvorrichtung 6 sind in Längsrichtung des Translationsrahmens 4 ebenfalls verfahrbar, so daß jeder Bereich der in der x-y-Ebene angeordneten Platte sowohl durch die Sägevorrichtung 5 als auch durch die Fräsvorrichtung 6 bearbeitbar ist.

Um die Konstruktion und Funktion der Vorrichtung 1 im folgenden näher zu erläutern, ist in Fig. 2 eine zu bearbeitende Platte 10 durch gestrichelte Linien angedeutet. Zwischen dieser zu bearbeitenden Platte 10 und dem Auflagerahmen 3 befindet sich eine sog. Grundplatte als weitere Auflage 11, auf die die Platte 10 mit ihrer Plattenrückseite flächig aufgelegt ist. Bei der Auflage 11 handelt es sich beispielsweise um eine Holzwerkstoffplatte als Verschleißplatte.

Weiter zeigt Fig. 2 eine Fixiereinrichtung (ohne Bezugszeichen) für die Platte 10, die auf der einen (Längs-)Seite der Platte 10 einen Spannbalken 13 und auf der gegenüberliegenden (Längs-)Seite der Platte 10 einen Anschlag 14 umfaßt. Am Spannbalken 13 ist eine nicht näher bezeichnete Auskragung ausgebildet, die mit der entsprechenden Seitenfläche der Platte 10 in Berührung steht. Der Spannbalken 13 kann sich im wesentlichen über die gesamte Länge der Platte 10 erstrecken oder auch aus einzelnen Abschnitten bestehen. Der Spannbalken 13 bzw. die einzelnen Abschnitte werden mit Hilfe eines oder mehrerer vorzugsweise pneumatischer Zylinder 15 gegen die Seitenfläche der Platte 10 bewegt und halten dadurch die Platte 10 in der definierten Lage.

Weiter zeigt Fig. 2 eine Absaugeinrichtung (ohne Bezugszeichen) für Bearbeitungsrückstände wie Späne oder Staub. Die Absaugleitung 17 (oder Absaugkanal) ist dabei vom Inneren des Translationsrahmens 4 sowie vom Inneren eines Konstruktionselementes 18 des Tragegestells 2 gebildet. Bei dem Konstruktionselement 18 kann es sich beispielsweise um einen üblichen Hohlträger als Rahmenelement handeln. Die Richtung des Absaugens ist in Fig. 2 durch einen Pfeil dargestellt. Die nähere Ausgestaltung der Absaugeinrichtung, insbesondere die Überführung des Absauggutes aus dem Translationsrahmen 4 in das Konstruktionselement 18 des Tragestells 2, ist in der Beschreibungseinleitung ausführlicher beschrieben und in Fig. 2 nicht im einzelnen dargestellt.

Weiter zeigt Fig. 2 an der Unterseite des Translationsrahmens 4 eine Reihe von bolzenartigen Elementen 20, die vertikal in Richtung auf die Platte 10 reversibel ausfahrbar sind. Dadurch sind Mittel zum Austransport der Platte bzw. der bei der Bearbeitung erhaltenen Ausschnitte nach der Bearbeitung gebildet, deren Funktion im folgenden noch beschrieben wird.

Schließlich sind in Fig. 2 weitere bolzenartige Elemente 22 dargestellt, die in beliebiger Anzahl und Anordnung, insbesondere rasterartig am Auflagerahmen 3, angeordnet sind. Diese bolzenartigen Elemente 22 sind von unten vertikal in Richtung auf die Platte 10 reversibel ausfahrbar, wobei an den entsprechenden Stellen an der als Auflage 11 dienenden Grundplatte nicht näher dargestellte Aussparungen vorhanden sind. Die bolzenartigen Elemente 22 dienen als Mittel zum An- oder Ausheben der Platte nach ihrer Bearbeitung. Diese Funktion wird im folgenden noch beschrieben.

In Fig. 3 ist das in Fig. 1 mit dem Bezugszeichen 9 versehene Karussell in einer leicht abgewandelten Ausführung schematisch in Draufsicht dargestellt.

Das in Fig. 3 mit dem Bezugszeichen 31 versehene Karussell, das im vorliegenden Fall einen Durchmesser von 60 cm haben kann, ist an einer Grundplatte 32 angeordnet. Der Außenumfang des Karussells 31 ist nach Art eines Zahn- oder Schneckenrades 33 ausgebildet, das mit einer entsprechenden Zahn- bzw. Schneckenwelle 34 zusammenwirkt bzw. ineinandergreift. Die stationäre Schneckenwelle 34 ist mit Hilfe des Motors 35 antreibbar. Durch die beschriebene Anordnung wird die Drehbwegung des Karussells 31, vorzugsweise in der zur x-y-Ebene der zu bearbeitenden Platte parallelen Ebene, ermöglicht.

Auf dem Karussell 31 sind eine Sägevorrichtung 36 mit Sägewerkzeug 37 und Motor 38 sowie eine im einzelnen nicht näher dargestellte Fräsvorrichtung 39 (ggf. auch Bohrvorrichtung) angeordnet. Aus Platzgründen befinden sich die Vorrichtungen 36 und 39 in geeignetem Abstand voneinander, wobei der jeweilige Schwerpunkt der beiden Vorrichtungen aus Stabilitätsgründen jeweils in gleicher Entfernung vom Mittelpunkt des Karussells 31 vorgesehen sein kann.

Durch die gewählte Anordnung ist das Karussell 31 und damit die Säge- und Fräswerkzeuge um einen Winkel von maximal 360° schwenkbar, womit insbesondere beim Einsatz der Säge, im vorliegenden Fall einer Kreissäge, alle möglichen Schnittwinkel abgedeckt sind.

Damit wird mit der erfindungsgemäßen Vorrichtung die oben definierte x-Richtung bzgl. der zu bearbeitenden Platte durch die Längsbewegung des Translationsrahmens und die y-Richtung durch die Bewegung, beispielsweise des Karussells, mit seiner Grundplatte entlang des Translationsrahmens abgedeckt. Die Bewegung des Karussells entlang des Translationsrahmens in y-Richtung kann dabei mit Hilfe von motorgetriebenen Kugelspindeln erfolgen. Die Schwenkung der Bearbeitungswerkzeuge erfolgt wie beschrieben durch die entsprechende Drehung des Karussells. Schließlich können sowohl das Sägewerkzeug als auch das Fräswerkzeug in der in der Beschreibung dargestellten Weise verkippt werden, wobei üblicherweise ein Kippwinkel zwischen 0° und 45° ermöglicht wird. Damit sind entsprechende Gehrungsschnitte herstellbar. Das Verkippen kann dabei beispielsweise ebenfalls mit Hilfe motorgetriebener Kugelspindeln erfolgen, die in Fig. 3 jeweils oberhalb und unterhalb der Vorrichtungen 36 und 39 als Rechtecke mit Innenkreis zeichnerisch schematisch dargestellt sind.

Eine in den Figuren 1 bis 3 dargestellte Vorrichtung zur Bearbeitung von Platten arbeitet nach dem folgenden Verfahren.

Zunächst wird eine zu bearbeitende Platte 10 auf den Auflagerahmen 3 bzw. eine sich darauf befindende Auflage 11 eingebracht. Der Translationsrahmen 4 mit der Sägevorrichtung 5 und der Fräsvorrichtung 6 befindet sich dabei vorzugsweise an einer der beiden äußeren Positionen des Auflagerahmens 3 oder wird in eine dieser Positionen verfahren. Anschließend wird die Platte 10 mit Hilfe der Fixiereinrichtung in einer definierten Lage festgelegt. Daraufhin werden die vorgesehenen Schnitte ausgeführt, d.h. es werden Fenster-, Türen- oder sonstige Ausschnitte gebildet und/oder die Seitenflächen der Platte 10 geschnitten. Dabei erfolgt die Absaugung der Späne oder des Staubes mit Hilfe der beschriebenen Absaugeinrichtung, die durch Konstruktionselemente der Vorrichtung 1 sowie eine nicht dargestellte Absaugung gebildet ist.

Nachdem die Fixiereinrichtung gelöst ist, werden in einem nächsten Verfahrensschritt die Bolzen 22 am Auflagerahmen 3 durch die als Auflage 11 dienende Grundplatte ausgefahren, wodurch die bearbeitete Platte 10 angehoben wird. Es werden nur die Bolzen 22 betätigt, die nicht irgendwelchen Ausschnitten oder Abfallstücken zugeordnet sind. Durch das Anheben der bearbeiteten Platte 10 wird diese von den Ausschnitten und Abfallstücken getrennt, wobei Ausschnitte und Abfallstücke auf der Auflage 11 liegen bleiben. Anschließend wird der Translationsrahmen 4 auf die Seite der Vorrichtung 1 verfahren, die der Austransportseite für die bearbeitete Platte 10 gegenüberliegt. Das Verfahren des Translationsrahmens 4 erfolgt dabei über die entsprechenden Abmessungen der Platte 10 hinaus. Dann werden die sich an der Unterseite des Translationsrahmens 4 befindenden Bolzen 20 ausgefahren. Dieses Ausfahren kann ggf. bis knapp über die Oberfläche der Auflage 11 erfolgen. Daraufhin wird der Translationsrahmen 4 in Austransportrichtung in Bewegung gesetzt, wobei die Platte 10 durch die ausgefahrenen Bolzen 20 aus der Vorrichtung 1 austransportiert wird.

Schließlich können die Ausschnitte und Abfallstücke beispielsweise manuell entfernt werden. Dieses Entfernen kann auch automatisch erfolgen, beispielsweise mit Hilfe der Bolzen 20 oder ggf. durch eine weitere, an der Unterseite des Translationsrahmens ausfahrbare Einrichtung, die sämtliche Ausschnitte und Abfallstücke beispielsweise bei der auf den Austransport folgenden Rückbewegung aus der Vorrichtung 1 hinausschiebt. Eine derartige Einrichtung kann beispielsweise aus einem balkenartigen Element bestehen, das ebenfalls vertikal in Richtung auf den Auflagerahmen reversibel ausfahrbar ist.

Anschließend steht die Vorrichtung 1 für die Bearbeitung einer weiteren Platte bereit. Wie bereits beschrieben, kann der Betrieb der Vorrichtung vollautomatisch, ggf. nach Vorgabe, insbesondere CAD-Vorgabe, erfolgen. Dabei wird der gesamte Ablauf durch einen Computer gesteuert, der eine reibungslose Abfolge der einzelnen Bearbeitungsschritte gewährleistet. Dementsprechend kann die Betätigung der Fixiereinrichtung, der Absaugeinrichtung und der Mittel zum Austransport der Platte und/oder Ausschnitte bzw. zum An- oder Ausheben der Platte nach Bearbeitung computergesteuert erfolgen.

## Patentansprüche

1. Vorrichtung zur Bearbeitung von Platten, insbesondere Holzwerkstoffplatten in im wesentlichen horizontaler Lage, mit einer mindestens ein Sägewerkzeug (7) aufweisenden Sägevorrichtung (5) und/oder einer mindestens ein Fräswerkzeug (8) aufweisenden Fräsvorrichtung (6) zur Erzeugung von Schnittflächen, dadurch gekennzeichnet, daß ein drehbares und ggf. kippbares Karussell (9; 31) zur Aufnahme der Säge- und/oder Fräsvorrichtung bzw. des Säge- und/oder Fräswerkzeuges vorgesehen ist.

2. Vorrichtung nach Anspruch 1, dadurch gekennzeichnet, daß das Karussell (31) durch ein vorzugsweise an seinem Außenumfang vorgesehenes Zahn- bzw. Schneckenrad (33) und eine damit zusammenwirkende motorgetriebene Zahn- bzw. Schneckenwelle (34) drehbar ausgebildet ist.

3. Vorrichtung nach Anspruch 1 oder Anspruch 2, dadurch gekennzeichnet, daß eine kombinierte Säge- und Fräsvorrichtung als Zuschneidevorrichtung vorgesehen ist.

4. Vorrichtung nach einem der vorhergehenden Ansprüche, dadurch gekennzeichnet, daß die Säge- und/oder Fräsvorrichtung bzw. das Säge- und/oder Fräswerkzeug über mehrere Parameter computergesteuert bewegbar ausgebildet ist.

5. Vorrichtung nach einem der vorhergehenden Ansprüche, dadurch gekennzeichnet, daß die Bewegung der Säge- und/oder Fräsvorrichtung bzw. des Säge- und/oder Fräswerkzeuges und dementsprechend die Erzeugung der Schnittflächen nach Vorgabe, insbesondere nach CAD-Vorgabe, ausführbar ist.

6. Vorrichtung nach einem der vorhergehenden Ansprüche, dadurch gekennzeichnet, daß die Säge- und/oder Fräsvorrichtung oder das Säge- und/oder Fräswerkzeug bzgl. eines Koordinatensystems mit
x : erste Richtung parallel zu einer Plattenoberfläche
y : zweite Richtung parallel zur Plattenoberfläche und senkrecht zur ersten Richtung
z : dritte Richtung senkrecht zur Plattenoberfläche
nach Maßgabe folgender Parameter bewegbar oder steuerbar ist:
A : (x,y)-Koordinaten des Anfangspunktes einer Schnittlinie zwischen Schnittfläche und Plattenoberfläche
E : (x,y)-Koordinaten des Endpunktes der Schnittlinie zwischen Schnittfläche und Plattenoberfläche
N : (x,y,z)-Koordinaten einer Schnittflächennormalen.

7. Vorrichtung nach Anspruch 6, dadurch gekennzeichnet, daß die Säge- und/oder Fräsvorrichtung oder das Säge- und/oder Fräswerkzeug zusätzlich nach Maßgabe eines weiteren Parameters bewegbar oder steuerbar ist, nämlich
T : Betrag eines in der Schnittfläche senkrecht zur Schnittlinie A-E verlaufenden Schnittiefenvektors.

8. Vorrichtung nach einem der vorhergehenden Ansprüche, dadurch gekennzeichnet, daß das Karussell (9) mit Sägevorrichtung (5) und/oder Fräsvorrichtung (6) parallel zur durch die Plattenoberfläche definierten x-y-Ebene verfahrbar an einem Translationsgestell oder Translationsrahmen (4) angeordnet ist.

9. Vorrichtung nach einem der vorhergehenden Ansprüche, dadurch gekennzeichnet, daß ein Tragegestell (2) mit einem eine Auflagefläche definierenden Auflagerahmen (3) für mindestens eine Platte (10) vorgesehen ist, wobei vorzugsweise am Tragegestell (2) ein Translationsgestell oder -rahmen (4) für die Sägevorrichtung (5) und/oder die Fräsvorrichtung (6) verfahrbar gelagert ist.

10. Vorrichtung nach Anspruch 9, dadurch gekennzeichnet, daß die Auflagefläche mindestens teilweise durch punkt- oder linienförmige Auflageelemente gebildet ist.

11. Vorrichtung nach Anspruch 9 oder Anspruch 10, dadurch gekennzeichnet, daß auf der Auflagefläche eine weitere, vorzugsweise auswechselbare, großflächige Auflage (11), insbesondere eine Holzwerkstoffplatte, vorgesehen ist, auf die die zu bearbeitende Platte (10) flächig auflegbar ist.

12. Vorrichtung nach Anspruch 11, dadurch gekennzeichnet, daß die Auflage Aussparungen, insbesondere für Mittel zum An- oder Ausheben der zu bearbeitenden Platte, aufweist.

13. Vorrichtung nach einem der vorhergehenden Ansprüche, gekennzeichnet durch eine insbesondere computergesteuert betätigbare Fixiereinrichtung für die Platte.

14. Vorrichtung nach Anspruch 13, dadurch gekennzeichnet, daß die Fixiereinrichtung einen Spannbalken (13) umfaßt, der sich entlang mindestens eines Teils einer Seite des Auflagerahmens (3) erstreckt und gegen die zugehörige Plattenseite unter Andruck, insbesondere pneumatisch bewegbar ist.

15. Vorrichtung nach Anspruch 13 oder Anspruch 14, dadurch gekennzeichnet, daß die Fixiereinrichtung mindestens einen Anschlag (14) umfaßt, der vorzugsweise auf der dem Spannbalken (13) gegenüberliegenden Seite des Auflagerahmens (3) bzw. der Platte (10) vorgesehen ist.

16. Vorrichtung nach einem der vorhergehenden Ansprüche, gekennzeichnet durch eine Absaugeinrichtung für bei der Plattenbearbeitung erzeugte Bearbeitungsrückstände, insbesondere Stäube.

17. Vorrichtung nach Anspruch 16, dadurch gekennzeichnet, daß das Translationsgestell bzw. der Translationsrahmen (4) für die Sägevorrichtung (5) und/oder die Fräsvorrichtung (6) einen Teil der Absaugeinrichtung bildet, wobei insbesondere Absauggut über das Translationsgestell bzw. den Translationsrahmen (4) in das Tragegestell (2) geführt ist.

18. Vorrichtung nach Anspruch 17, dadurch gekennzeichnet, daß zur Überführung des Absauggutes in das Tragegestell ein rohrartiges Zwischenstück, das vorzugsweise einen Querschnitt nach Art eines flachen Rechtecks besitzt, vorgesehen ist.

19. Vorrichtung nach Anspruch 18, dadurch gekennzeichnet, daß das Zwischenstück in einem kanal- oder rohrartig ausgebildeten Konstruktionselement (18) des Tragegestells (2) bewegbar geführt ist, wobei sich das Konstruktionselement (18) insbesondere im rechten Winkel zum Translationsgestell bzw. -rahmen (4) erstreckt.

20. Vorrichtung nach Anspruch 19, dadurch gekennzeichnet, daß mindestens ein Dichtelement zur Führung des Zwischenstücks im Konstruktionselement vorgesehen ist.

21. Vorrichtung nach Anspruch 20, dadurch gekennzeichnet, daß lippenartige Dichtelemente vorgesehen sind, zwischen denen das Zwischenstück geführt ist.

22. Vorrichtung nach einem der vorhergehenden Ansprüche, gekennzeichnet durch Mittel zum Austransport der Platte und/oder bei der Bearbeitung erhaltener Plattenausschnitte nach der Bearbeitung.

23. Vorrichtung nach Anspruch 22, dadurch gekennzeichnet, daß als Mittel zum Austransport bolzenartige Elemente (20) vorgesehen sind, die relativ zur zu bearbeitenden Platte (10) vertikal verfahrbar oder ausfahrbar sind.

24. Vorrichtung nach Anspruch 22 oder Anspruch 23, dadurch gekennzeichnet, daß die Mittel am Translationsgestell bzw. Translationsrahmen (4) vorgesehen sind, wobei vorzugsweise entlang des Translationsgestells bzw. -rahmens (4) eine Reihe bolzenartiger Elemente (20) in regelmäßigem Abstand vorgesehen ist.

25. Vorrichtung nach einem der vorhergehenden Ansprüche, gekennzeichnet durch Mittel zum Anheben oder Ausheben der Platte nach ihrer Bearbeitung.

26. Vorrichtung nach Anspruch 25, dadurch gekennzeichnet, daß als Mittel bolzenartige Elemente (22) vorgesehen sind, die relativ zu der zu bearbeitenden Platte (10) vertikal verfahrbar oder ausfahrbar sind.

27. Vorrichtung nach Anspruch 25 oder Anspruch 26, dadurch gekennzeichnet, daß die Mittel am Tragegestell (2), insbesondere am Auflagerahmen (3) angeordnet sind, wobei insbesondere die bolzenartigen Elemente (22) durch die Auflagefläche hindurchragen oder durch diese hindurch verfahrbar sind.

## Claims

1. A device for machining panels, more particularly wood-based material panels, in a substantially horizontally position, comprising a sawing device (5) including at least one sawing tool (7) and/or a shaping device (6) including at least one shaping tool (8) for producing cut surface areas, characterized in that a rotatable and where necessary tiltable carousel (9; 31) is provided for mounting the sawing and/or shaping device or sawing and/or shaping tool is provided.

2. The device as set forth in claim 1, characterized in that the carousel (31) is configured rotatable by a gear or worm wheel (33) provided preferably on its outer circumference and a motor-powered gear or worm shaft (34) cooperating therewith.

3. The device as set forth in claim 1 or 2 characterized in that a combination sawing and/or shaping device is provided as a device for cutting to size.

4. The device as set forth in in any of the preceding claims, characterized in that the sawing and/or shaping device or the sawing and/or shaping tool is configured movable over several parameters by computer control.

5. The device as set forth in any of the preceding claims, characterized in that the movement of the sawing and/or shaping device or the sawing and/or shaping tool and correspondingly the production of the cut surface areas is implementable programmed, more particularly by a CAD program.

6. The device as set forth in any of the preceding claims, characterized in that the sawing and/or shaping device or sawing and/or shaping tool is movable or controllable in accordance with a system of coordinates with
x: as the first direction parallel to a panel surface:
y: as the second direction parallel to the panel surface and parallel to the first direction;
z: as the third direction parallel to the panel surface;
as dictated by the following parameters:
A: (x,y) coordinates of the starting point of a cutting line between cut surface area and panel surface
E: (x,y) coordinates of the end point of the cutting line between cut surface area and panel surface;
N: (x,y,z) coordinates of a normal to the cut surface area.

7. The device as set forth in claim 6, characterized in that the sawing and/or shaping device or sawing and/or shaping tool is movable or controllable in accordance with a further parameter, namely
T: amount of a cutting depth vector oriented in the cut surface area parallel to the cutting line A-E.

8. The device as set forth in any of the preceding claims, characterized in that the carousel (9) including the sawing device (5) and/or shaping device (6) is arranged for travelling on a translation device or translation frame (4) parallel to the x-y plane defined by the panel surface.

9. The device as set forth in any of the preceding claims, characterized in that a supporting frame (2) is provided with a mounting frame (3) defining a mounting surface area for at least one panel (10), a translation device or frame (4) for the sawing device (5) and/or shaping device (6) being mounted for travelling preferably on the supporting frame (2).

10. The device as set forth in claim 9, characterized in that the mounting surface area is formed at least in part by the point or line-type mounting elements.

11. The device as set forth in claim 9 or claim 10, characterized in that provided on the mounting surface area is a further, preferably replaceable, mount (11) of large surface area, more particularly a panel of wood-based material, on which the panel (10) to be machined is squarely mountable.

12. The device as set forth in claim 11, characterized in that the mount comprises recesses, more particularly for means for lifting and ejecting the panel to be machined.

13. The device as set forth in any of the preceding claims, characterized by it comprising a locating means for the panel actuatable, more particularly computer controlled.

14. The device as set forth in claim 13, characterized in that the locating means comprises a clamping beam (13) extending along at least Part of one side of the mounting frame (3) and movable, more particularly urged pneumatically, against the correspondingly panel side.

15. The device as set forth in claim 13 or claim 14, characterized in that the locating means comprises at least one stop (14) provided preferably on the side of the mounting frame (3) or panel (10) opposite the clamping beam (13).

16. The device as set forth in any of the preceding claims, characterized by it comprising a suction exhaust means for removing machining debris produced during panel machining, more particularly, dusts.

17. The device as set forth in claim 16, characterized in that the translation frame (4) for the sawing device (5) and/or shaping device (6) forms part of the suction exhaust means, more particularly machining debris being guided through the translation frame (4) into the supporting frame (2).

18. The device as set forth in claim 17, characterized in that for transferring machining debris into the supporting frame a tubular adapter is provided having preferably a cross-section in the form of a flattened rectangle.

19. The device as set forth in claim 18, characterized in that the adapter is movingly guided in a passage or tubular-type design element (18) of the supporting frame (2), the design element (18) extending more particularly at right angles to the translation frame (4).

20. The device as set forth in claim 19, characterized in that at least one sealing element is provided for guiding the adapter in the design element.

21. The device as set forth in claim 20, characterized in that lip-type sealing elements are provided, by which the adapter is guided.

22. The device as set forth in any of the preceding claims, characterized by it comprising means for exiting the panel and/or panel cut-outs obtained in machining on completion of machining.

23. The device as set forth in claim 22, characterized in that the exit means are provided as pin-type elements (20) which can be travelled or extended vertically relative to the panel (10) to be machined.

24. The device as set forth in claim 22 or claim 23, characterized in that the means are provided on the translation frame (4), a row of pin-type elements (20) being preferably provided along the translation frame (4) on a regular center-spacing.

25. The device as set forth in any of the preceding claims, characterized by it comprising means for lifting or ejecting the panel after its machining.

26. The device as set forth in claim 25, characterized in that the means are provided as pin-type elements (22) which can be travelled or extended vertically relative to the panel (10) to be machined.

27. The device as set forth in claim 25 or claim 26, characterized in that the means are arranged on the supporting frame (2) more particularly on the mounting frame (3), more particularly the pin-type elements (22) protruding through the mounting surface area or provided for travelling therethrough.

## Revendications

1. Dispositif servant à usiner sensiblement horizontalement des panneaux, en particulier des panneaux en matériau dérivé du bois, avec au moins un dispositif de scie (5) présentant un outil de scie (7) et/ou un dispositif de fraise (6), présentant au moins un outil de fraise (8), pour la réalisation de surfaces de coupe, caractérisé en ce qu'un carrousel rotatif et éventuellement basculant (9 ; 31) est prévu pour le logement du dispositif de scie et/ou de fraise respectivement de l'outil de scie et/ou de fraise.

2. Dispositif selon la revendication 1, caractérisé en ce que le carrousel (31) est formé rotatif par une roue dentée ou à vis (33) prévue de préférence sur sa périphérie externe et un arbre dentée ou à vis (34) motorisé et coopérant.

3. Dispositif selon la revendication 1 ou la revendication 2, caractérisé en ce qu'il est prévu un dispositif combiné de scie et de fraise comme dispositif à débiter aux dimensions.

4. Dispositif selon l'une des revendications précédentes, caractérisé en ce que le dispositif de scie et/ou de fraise respectivement l'outil de scie et ou de fraise sont réalisés mobiles par l'intermédiaire de plusieurs paramètres pilotés par ordinateur.

5. Dispositif selon l'une des revendications précédentes, caractérisé en ce que le déplacement du dispositif de scie et/ou de fraise respectivement de l'outil de scie et ou de fraise et par conséquent la génération des surfaces de coupe sont extractibles par prédétermination en particulier par prédétermination par CAO.

6. Dispositif selon l'une des revendications précédentes, caractérisé en ce que le dispositif de scie et/ou de fraise respectivement l'outil de scie et/ou de fraise peuvent être mobiles ou commandés par rapport à un système de coordonnées
X :: première direction parallèle à une surface de panneau
Y : seconde direction parallèle à une surface de panneaux et perpendiculaire à la première direction
Z : troisième direction perpendiculaire à la surface de panneaux,
selon l'allocation des paramètres suivants :
A : Coordonnées (x,y) du point de départ d'une ligne de coupe entre une surface de coupe et une surface de panneau
E : Coordonnées (x,y) du point final de la ligne de coupe entre la surface de coupe et la surface de panneau
N : Coordonnées (x,y,z) d'une normale de surface de coupe de coordonnées.

7. Dispositif selon la revendication 6, caractérisé en ce que le dispositif de scie et/ou de fraise respectivement l'outil de scie et ou de fraise peuvent être mobiles ou commandés par un paramètre supplémentaire, notamment
T : Somme d'un vecteur de profondeur de coupe s'étendant perpendiculairement à la ligne de coupe A-E dans la surface de coupe.

8. Dispositif selon l'une des revendications précédentes, caractérisé en ce que le carrousel (9) Portant le dispositif de scie (5) et/ou le dispositif de fraise (6) est disposé sur un bâti de translation ou cadre de translation (4) de manière mobile parallèlement au plan x-y défini par la surface de panneau.

9. Dispositif selon l'une des revendications précédentes, caractérisé en ce qu'un bâti porteur (2) est prévu avec au moins un cadre de base (3) définissant une surface de base pour au moins un panneau (10), de préférence un bâti ou cadre de translation (4) étant logé sur le bâti porteur (2) de manière mobile pour le dispositif de scie (5) et/ou le dispositif de fraise (6).

10. Dispositif selon la revendication 9, caractérisé en ce que la surface de base est composée d'au moins partiellement par des éléments de base ponctuels ou linéaires.

11. Dispositif selon la revendication 9 ou la revendication 10, caractérisé en ce que sur la surface de base, il est prévu une autre base (11) de grande surface de préférence interchangeable en particulier un panneau en matériau dérivé du bois sur lequel la surface du panneau à usiner (10) peut être appliquée.

12. Dispositif selon la revendication 11, caractérisé en ce que la base présente des évidements en particulier pour des moyens de soulèvement ou d'enlevement du panneau à usiner.

13. Dispositif selon l'une des revendications précédentes, caractérisé par un dispositif de fixation actionné par une commande d'ordinateur pour le panneau.

14. Dispositif selon la revendication 13, caractérisé en ce que le dispositif de fixation comprend une poutre de serrage (13), qui s'étend au moins le long d'une partie d'une face du cadre de base (3) et est mobile sans pression en particulier de manière pneumatique en direction de la face de panneau respective.

15. Dispositif selon la revendication 13 ou la revendication 14, caractérisé en ce que le dispositif de fixation comprend au moins une butée (14) qui est prévue de préférence sur la face opposée à la poutre de serrage (13) du cadre de base (3) respectivement du panneau (10).

16. Dispositif selon l'une des revendications précédentes, caractérisé par un dispositif d'aspiration pour les résidus d'usinage en particulier les poussières émanant de l'usinage des panneaux.

17. Dispositif selon la revendication 16, caractérisé en ce que le bâti de translation respectivement le cadre de translation (4) pour le dispositif de scie (5) et/ou le dispositif de fraise (6) forme une partie du dispositif d'aspiration, en particulier le produit aspiré étant guidé par le bâti de translation respectivement le cadre de translation (4) dans le bâti support (2).

18. Dispositif selon la revendication 17, caractérisé en ce que pour le passage du produit aspiré dans le bâti support, il est prévu une pièce intercalaire tubulaire qui possède de préférence une section transversale en forme de rectangle plat.

19. Dispositif selon la revendication 18, caractérisé en ce que la pièce intercalaire est guidée de manière mobile dans un élément de construction (18) en forme de canal ou en forme de tube, du bâti porteur (2), l'élément de construction (18) s'étendant en particulier en angle droit par rapport au bâti de translation respectivement cadre de translation (4).

20. Dispositif selon la revendication 20, caractérisé en ce qu'au moins un élément d'étanchéité est prévu pour le guide de la pièce intercalaire dans l'élément de construction.

21. Dispositif selon la revendication 20, caractérisé en ce que des éléments d'étanchéité en forme de lèvre sont prévus entre lesquelles est guidée la pièce intercalaire.

22. Dispositif selon l'une des revendications précédentes, caractérisé par des moyens de transport du panneau et/ou des découpes obtenus à l'usinage après l'usinage.

23. Dispositif selon la revendication 22, caractérisé en ce que des éléments formant boulons (20) sont prévus comme moyen de transport qui sont mobiles ou extractibles verticalement par rapport au panneau à usiner (10).

24. Dispositif selon la revendication 22 ou la revendication 23, caractérisé en ce que les moyens sont prévus sur le bâti de translation ou cadre de translation (4) de préférence une série d'éléments formant boulons (20) étant prévue à distance régulière le long du bâti ou du cadre de translation (4).

25. Dispositif selon l'une des revendications précédentes, caractérisé par des moyens de soulèvement ou d'enlevement du panneau après l'usinage.

26. Dispositif selon la revendication 25, caractérisé en ce que des éléments 22 en forme de boulons sont prévus qui sont mobiles ou extractibles verticalement par rapport au panneau à usiner (10).

27. Dispositif selon la revendication 25 ou la revendication 26, caractérisé en ce que les moyens sont disposés sur le bâti support (2) en particulier sur le cadre de base (3) en particulier les éléments formant boulons (22) traversent la surface de base ou sont mobiles à travers celle-ci.
